# EUROPÄISCHE PATENTANMELDUNG

(11) **EP 2 409 805 A1**
(43) Veröffentlichungstag der Anmeldung: **25.01.2012**
(21) Anmeldenummer: 10190393.8
(22) Anmeldetag: 08.11.2010
(51) Int. Cl.: B23K 9/09, B23K 9/173, B23K 9/16, B23K 35/38

(54) **Verfahren zum Kurzlichtbogen-Tandemschweißen**

(30) Priorität: 22.07.2010 DE 102010038302
(71) Anmelder: Linde AG, 80331 München (DE)
(72) Erfinder: Wilhelm, Gerald, Dr., 85716 Unterschleißheim (DE); Matz, Christoph, 85716 Unterschleißheim (DE)

(57) **Zusammenfassung**

Die vorliegende Erfindung betrifft ein Verfahren zum Lichtbogenfügen, bei dem unter Verwendung wenigstens zweier abschmelzender Elektroden (4) Lichtbögen (11) zwischen den Elektroden (4) und dem Werkstück (2) ausgebildet werden, wobei wenigstens eine der Elektroden (4) zur Erzeugung eines elektronisch geregelten Kurzlichtbogens (11) eingerichtet ist, wobei Material (12) von der Elektrode (4) auf das Werkstück (2) unter Bildung eines geregelten Kurzschlusses (13) übertragen wird.

## Beschreibung

Die vorliegende Erfindung betrifft ein Verfahren zum Lichtbogenfügen, bei dem unter Verwendung wenigstens zweier abschmelzender Elektroden Lichtbögen zwischen den Elektroden und dem Werkstück ausgebildet werden, sowie eine entsprechende Vorrichtung.

### Stand der Technik

Beim Lichtbogenfügen unter Schutzgas brennt ein Lichtbogen zwischen einer in einem Brenner angeordneten Elektrode und einem zu bearbeitenden Werkstück. Eine Schweißverbindung entsteht durch ein Aufschmelzen des Grundwerkstoffs an der Bearbeitungsstelle im Lichtbogen und seine anschließende Wiedererstarrung. Wird eine abschmelzende Elektrode verwendet, geht deren Material als Zusatzwerkstoff in die Schweißverbindung ein. Bei einer Hartlotverbindung entsteht die stoffschlüssige Verbindung hingegen ausschließlich durch das geschmolzene und wiedererstarrte Lot, bei der Verwendung eines Lichtbogens meist dem Material der abschmelzenden Elektrode.

Zum Schutzgas-Lichtbogenschweißen sind neben Techniken, bei denen abschmelzende Elektroden verwendet werden, wie beispielsweise dem Metall-Aktivgas- und dem Metall-Inertgasschweißen, das Wolfram-Inertgasschweißen und das Plasmaschweißen bekannt.

Zu Steigerung der Produktivität werden in den letzten Jahren zunehmend Hochleistungsschweißverfahren mit abschmelzenden Elektroden eingesetzt. Gegenüber konventionellen Verfahren ist dabei die Abschmelzleistung der Elektroden deutlich erhöht, was durch die Verwendung von Drähten mit größeren Durchmessern und/oder mit höheren Vorschubgeschwindigkeiten erreicht wird. Die höheren Abschmelzleistungen lassen sich in höhere Schweißgeschwindigkeiten oder Schweißnahtvolumina umsetzen.

Grundlagen des Metall-Schutzgas-Hochleistungsschweißens sind im Merkblatt des deutschen Verbandes für Schweißen und verwandte Verfahren e.V., DSV 0909-1 (September 2000) und DSV 0909-2 (Juni 2003) näher beschrieben.

Neben Schweißverfahren mit einer abschmelzenden Elektrode sind beim Hochleistungsschweißen auch Verfahren bekannt, bei welchen zwei oder mehrere Elektroden abgeschmolzen werden. Diese Verfahren werden auch als sogenannte Mehrdrahtprozesse bezeichnet. Es werden dabei in der Regel zwei abschmelzende Elektroden verwendet, jedoch ist auch die Verwendung von drei oder mehr Elektroden bekannt. Die Elektroden schmelzen in getrennten Lichtbögen in der Regel unter einer gemeinsamen Schutzgasabdeckung ab und bilden zusammen mit dem Werkstückmaterial ein gemeinsames Schmelzbad.

Die Elektroden sind dabei häufig in Schweißrichtung hintereinander angeordnet, so dass auf eine vorlaufende Elektrode eine oder mehrere nachlaufende Elektroden folgen. Werden zwei Elektroden verwendet und diese durch ein gemeinsames Potential gespeist, spricht man vom Doppeldrahtschweißen. Werden für die beiden Elektroden hingegen unterschiedliche Potentiale verwendet, handelt es sich um das sogenannte Tandemschweißen. Ein Verfahren zum Tandemschweißen ist beispielsweise in der EP 1707296 B1 offenbart.

Bei den genannten Fügeverfahren wird durch den Lichtbogen lokal Wärme in das Werkstück eingebracht. Dies ist einerseits Grundvoraussetzung, um das Werkstück und das Zusatzmaterial zu verflüssigen, ein Schmelzbad auszubilden und damit, nach der Erstarrung, eine stoffschlüssige Verbindung herzustellen. Anderseits bringt der Wärmeeintrag aber Probleme mit sich. So treten im Werkstück aufgrund der großen Temperaturdifferenzen Spannungen auf, die z.B. zu einem Verzug des Bauteils oder zu Rissen führen können.

Beim Schweißen von dünnen Werkstücken, insbesondere von dünnen Blechen mit einer Stärke von wenigen Millimetern, wird die Schmelze sehr leicht aus dem Schweißbad geblasen, so dass Löcher auftreten können. Auch beim Fügen beschichteter Werkstücke treten Probleme auf, beispielsweise wenn die bei niedriger Temperatur verdampfende Beschichtung zu einer Rauchbildung führt und es auf diese Weise zu Einschlüssen und Poren in der Schweißnaht kommt. Die letztgenannten Probleme zeigen sich insbesondere beim Fügen verzinkter Bleche.

Der Erfindung liegt daher die Aufgabe zugrunde, Verfahren zum Lichtbogenfügen anzugeben, welche stabil und prozesssicher ablaufen und insbesondere ein spritzerfreies Arbeiten bei hohen Bearbeitungsgeschwindigkeiten unter Erhalt qualitativ hochwertiger Ergebnisse ermöglichen.

### Offenbarung der Erfindung

Vor diesem Hintergrund werden erfindungsgemäß ein Verfahren zum Lichtbogenfügen sowie eine entsprechende Vorrichtung mit dem Merkmalen der unabhängigen Patentansprüche vorgeschlagen. Vorteilhafte Ausgestaltungen sind Gegenstand der Unteransprüche sowie der nachfolgenden Beschreibung.

Die erfindungsgemäßen Maßnahmen beinhalten, in einem Verfahren, bei dem wenigstens zwei abschmelzende Elektroden verwendet werden, mittels derer Lichtbögen zwischen den Elektroden und dem Werkstück ausgebildet werden, wenigstens eine der Elektroden zur Erzeugung eines Kurzlichtbogens einzurichten, wobei Material von der Elektrode an das Werkstück unter Bildung eines geregelten Kurzschlusses übertragen wird.

Kurzlichtbogenverfahren sind zum Fügen von Werkstücken bekannt. Hierbei bildet sich aufgrund der räumlichen Nähe von Elektrode und Werkstück während des Übergangs des Elektrodenwerkstoffs eine Materialbrücke zwischen Elektrode und Werkstück und damit ein elektrischer Kurzschluss aus.

Durch den Kurzschluss wird das sich von der Elektrode ablösende Material abgeschnürt, woraufhin sich dieses von der Elektrode löst. In dem elektrischen Feld, das nach entsprechender Auflösung des Kurzschlusses wieder vorliegt, entzündet sich der Lichtbogen erneut.

Verfahren und Vorrichtungen zum Schweißen mit Kurzlichtbogen sind beispielsweise in der US 2005/0056629 A1, der EP 1462207 A1, der EP 1379354 A1, der EP 1757401 A1, der WO 2005/042199 A1 und der WO 2005/051586 A1 offenbart. Probleme beim Kurzlichtbogenfügen treten beim Wiederzünden des Lichtbogens auf. Die Schnelligkeit, mit der der Lichtbogen nach der Kurzschlussphase wieder zwischen Elektrode und Werkstück brennt, ist entscheidend für die Qualität der Schweißnaht und bestimmt maßgeblich die maximale Schweißgeschwindigkeit. Eine unzureichende Wiederzündfähigkeit führt zu ungleichmäßigen, porösen und fehlerhaften Schweißnähten und Lotverbindungen. Diese Qualitätsmängel zeigen sich vor allem bei hohen Bearbeitungsgeschwindigkeiten.

Zusammenfassend kann festgestellt werden, dass die Kurzlichtbogenverfahren hinsichtlich des Energieeintrags in ein Werkstück Vorteile bieten.

Mit anderen Worten beinhaltet die Erfindung daher eine Kombination aus Kurzlichtbogen- und Zweidraht- bzw. Tandemverfahren, wobei die Vorteile beider Techniken, nämlich eine verbesserte Schweißgeschwindigkeit und eine hohe Abschmelzleistung einerseits und ein verringerter Energieeintrag andererseits ausgenutzt werden können.

Der Verwendung von Kurzlichtbogenverfahren könnte in Tandemschweißverfahren beispielsweise die gegenseitige elektromagnetische Beeinflussung der Lichtbögen entgegenstehen. Wie jedoch durch die Erfinder herausgefunden, können gerade diese Hindernisse durch die Verwendung geregelter Verfahren überwunden werden.

Gegenüber dem Stand der Technik wird daher insgesamt ein Verfahren mit hoher Prozessstabilität unter Ausnutzung der genannten Vorteile bereitgestellt.

Die Verwendung des Kurzlichtbogens weist insbesondere deshalb Vorteile auf, weil es hierdurch möglich ist, mit sehr geringen Streckenenergien zu schweißen. Die genannten Kurzlichtbogentechniken eignen sich daher besonders für verzugsarmes Schweißen und sind insbesondere für dünne Materialien, die eine Materialstärke von weniger als 5 mm aufweisen, geeignet.

Prinzipiell weist der Kurzlichtbogen von allen Lichtbogenarten den geringsten Wärmeeintrag auf. Um die auf dem Wärmeeintrag basierenden Probleme herkömmlicher Fügeverfahren zu verringern, wurden in jüngster Zeit Verfahren des Schweißens und Hartlötens mit Kurzlichtbogen in Hinblick auf eine Minimierung des Wärmeeintrags weiterentwickelt. Insbesondere durch eine elektronische Regelung wird in erster Linie der Kurzschlussstrom verringert, so dass der Wärmeeintrag in das Werkstück weiter zurückgeht. Ferner wird mit der elektronischen Steuerung die Abruptheit, mit welcher die Kurzschlussbrücke reißt und der Materialübergang stattfindet, abgemildert, so dass Schweißspritzer deutlich abnehmen. Die elektronische Regelung betrifft dabei meist die Strom- und Spannungswerte und teilweise auch den Vorschub der abschmelzenden Elektrode.

Erfindungsgemäß wurde erkannt, dass die elektronische Regelung auch eine Verwendung des Kurzlichtbogens im Rahmen eines Zweidraht- oder Tandemverfahrens zulässt, da es aufgrund der Kurzschlussregelung möglich ist, den Prozess so einzustellen, dass sich die elektrischen Felder der beiden Lichtbögen gar nicht oder nur wenig beeinflussen. Insbesondere die geregelten Kurzlichtbogenprozesse ermöglichen also Schweißungen mit erneut geringerem Energieeintrag. Hierdurch wird ein Verarbeiten nochmals dünnerer Materialien, also von Materialien, die eine Dicke von 0,3 mm bis ca. 3,0 mm aufweisen, sicher und verzugs- bzw. spannungsarm möglich. Somit werden auch für sehr dünne Materialien von 0,3 bis 3,0 mm sehr hohe Abschmelzraten und sehr hohe Bearbeitungsgeschwindigkeiten möglich.

Mit besonderem Vorteil kommt im Rahmen des erfindungsgemäßen Verfahrens eine in Schweißrichtung vorlaufende und wenigstens eine in Schweißrichtung nachlaufende Elektrode zum Einsatz. Eine oder mehrere der Elektroden können dabei zur Ausbildung eines Kurzlichtbogens mit geregeltem Kurzschluss ausgebildet sein.

Wird eine in Schweißrichtung vorlaufende und wenigstens eine in Schweißrichtung nachlaufende Elektrode verwendet, so ist es von besonderem Vorteil, wenn die nachlaufende Elektrode mit einem Kurzlichtbogen mit geregeltem Kurzschluss betrieben wird. Hierbei macht man sich zu nutze, dass die nachlaufende Elektrode die bereits vorhandene Prozesswärme, die durch eine jeweils vorlaufende Elektrode erzeugt wurde, ausnutzen kann und hierdurch sehr viel geringere Energiemengen benötigt. Die nachlaufende Elektrode, die ja mit einem Kurzlichtbogen mit geregeltem Kurzschluss betrieben wird, kann dann Einstellungen aufweisen, die für einen extrem kleinen Energieeintrag sorgen.

So ist vorteilhafterweise vorgesehen, wenigstens eine nachlaufende Elektrode mit einer deutlich geringeren Energiemenge, vorzugsweise mit 10 bis 90 %, eher vorzugsweise 25 bis 50 % der Energie der (jeweils) vorlaufenden Elektrode zu beaufschlagen. Hierdurch wird, zusätzlich zur Verwendung des Kurzlichtbogens, nochmals weniger Streckenenergie in den Gesamtprozess eingebracht, wodurch auch kritische Fügeaufgaben problemlos durchführbar sind.

Mit besonderem Vorteil kann auch ein Verfahren zum Einsatz kommen, bei dem wenigstens zwei Elektroden schräg oder quer zur Schweißrichtung angeordnet sind. Während üblicherweise Elektroden bei Mehrdraht-Schweißverfahren in Schweißrichtung hintereinander, wie oben dargestellt, angestellt werden, kann zur besseren Spaltüberbrückung oder bei der Herstellung von Überlappungsstößen auch ein Verdrehen wenigstens zweier Elektroden um beispielsweise 10 bis 30 °C zur Schweißrichtung eingesetzt werden. Zum Auftragsschweißen kann eine Verdrehung von bis zu 90 °C zum Einsatz kommen.

Vorteilhafterweise kann ein entsprechendes Verfahren auch die Verwendung wenigstens zweier unterschiedlicher Lichtbogenarten beinhalten, wobei jeweils wenigstens eine Elektrode zur Erzeugung eines geregelten oder ungeregelten Kurzlichtbogens, eines Übergangslichtbogens, eines Langlichtbogens, eines Sprühlichtbogens, eines Hochleistungslichtbogens oder eines Impulslichtbogens eingerichtet sein kann.

Durch die Verwendung zweier oder mehrerer Lichtbogenarten, insbesondere mit einem Kurzlichtbogen, können die dem Fachmann bekannten Vorteile der einzelnen Lichtbogenarten kombiniert werden.

Zur Erzielung weiterer Vorteile kann in dem vorgeschlagenen Verfahren auch wenigstens eine Elektrode zum Schweißen mit geregeltem Kurzlichtbogen unter Verwendung von Wechselstrom eingerichtet sein. Damit verringert sich der Energieeintrag in das Werkstück besonders.

Vorteilhafterweise kommt im Rahmen des vorgestellten Verfahrens ein Schweißstrom zwischen 10 und 400 A, vorzugsweise zwischen 40 und 300 A zum Einsatz und/oder es wird eine Schweißspannung zwischen 10 und 50 V, vorzugsweise zwischen 15 und 35 V verwendet.

Mit besonderem Vorteil ist das erfindungsgemäße Verfahren als Schutzgas-Schweißverfahren ausgebildet und/oder wenigstens eine der verwendeten Elektroden zur Verwendung eines Schutzgases eingerichtet, wobei als Schutzgas vorteilhafterweise eine Schutzgasmischung verwendet wird, die Kohlendioxid, Argon, Helium, Stickstoff und/oder Sauerstoff aufweist. Auch eine Dotierung des Schutzgases oder der Schutzgasmischung mit bekannten Dotiergasen und Dotiergasmischungen wie beispielsweise CO₂, O₂, N₂O, NO oder N₂ kann von Vorteil sein.

Weitere Vorteile und Ausgestaltungen der Erfindung ergeben sich aus der Beschreibung und der beiliegenden Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Die Erfindung ist anhand von Ausführungsbeispielen in der Zeichnung schematisch dargestellt und wird im Folgenden unter Bezugnahme auf die Zeichnung ausführlich beschrieben.

### Figurenbeschreibung

- Figur 1: zeigt ein Kurzlichtlichtbogen-Schweißverfahren gemäß dem Stand der Technik mit hierbei auftretenden Phasen, Spannungs- und Stromprofilen in schematischer Darstellung.
- Figur 2: zeigt eine Schweißvorrichtung, die zur Durchführung eines erfindungsgemäßen Verfahrens eingerichtet ist, in schematischer Darstellung.

In den nachfolgenden Figuren sind einander entsprechende Elemente mit gleichen Bezugszeichen angegeben und werden der Übersichtlichkeit halber nicht wiederholt erläutert.

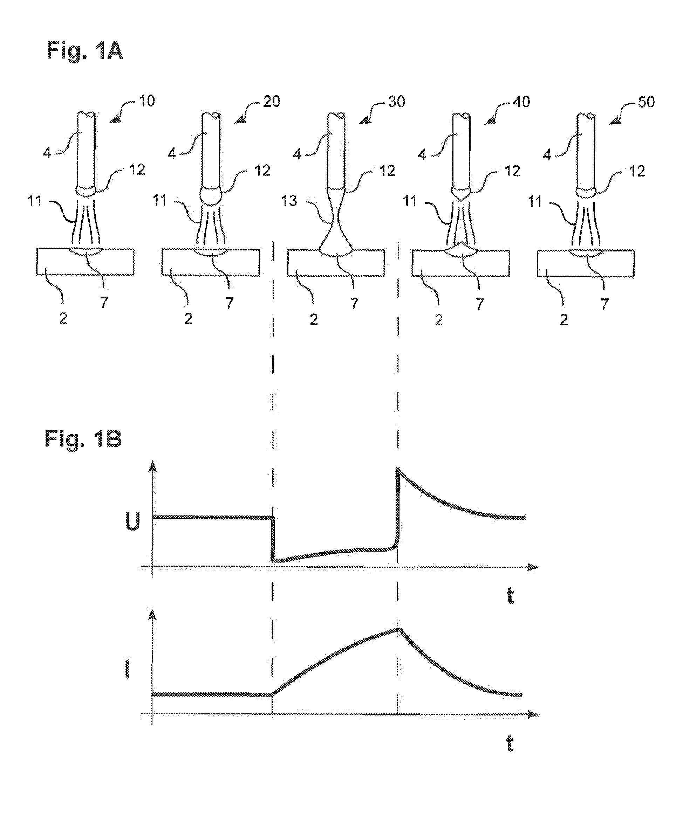

Figur 1 zeigt in Teilfigur 1A in schematischer Darstellung ein Kurzlichtbogen-Schweißverfahren in Form von fünf hierbei auftretenden Phasen 10, 20, 30, 40 und 50, wobei die Phase 10 im Wesentlichen der Phase 50 entspricht.

Es sei zu verstehen gegeben, dass die Einzelphasen 10 bis 50 beim Kurzlichtbogen-Schweißen zeitlich zyklisch ablaufen, wobei die Dauer der einzelnen Phasen nicht speziell festgelegt ist, sondern sich nach den eingestellten Schweißparametern richtet.

Es ist jeweils eine auf ein Werkstück 2 ausgerichtete Elektrode 4 dargestellt, wobei der Übersichtlichkeit halber auf, wie erwähnt, eventuell vorhandene weitere Elektroden und/oder Schutzgasdüsen oder dergleichen und auf eine Darstellung der entsprechenden Ansteuereinrichtungen verzichtet wurde. Bei der Elektrode 4 handelt es sicht um eine abschmelzende Elektrode, von der durch Energieeinwirkung Elektrodenmaterial auf das Werkstück 2 übertragen wird.

Zwischen der Elektrode 4 und dem Werkstück 2 kommt es zur Ausbildung eines Lichtbogens 11. Der entsprechende Energieeintrag bewirkt eine Ausbildung eines Schweißbads 7 in dem Werkstück 2 und ein Aufschmelzen der Elektrode unter Ausbildung einer Schmelze 12. Im weiteren Verlauf kommt es in einer nächsten Phase 20 zu einer Vergrößerung der Schmelze 12 an der aufschmelzenden Elektrode und schließlich, in einer weiteren Phase 30, zu einem Materialübergang 13 zwischen der Elektrode 4 und dem Werkstück 2, wodurch es zu einer elektrischen Verbindung zwischen der Elektrode 4 und dem Werkstück 2 bzw. zwischen der Schmelze 12 und dem Schweißbad 7 kommt.

Wie ersichtlich kommt es zu einem Kurzschluss zwischen der Elektrode 4 und dem Werkstück 2, wobei die Ausbildung eines derartigen Kurzschlusses in geregelten Kurzlichtbogenverfahren entsprechend beeinflusst wird.

In einer nächste Phase 40 ist Material von der Elektrode 4 auf das Werkstück 2 übergegangen, es kommt zu einer elektrischen Trennung der Elektrode 4 von dem Werkstück 2 und zu einem erneuten Ausbilden eines Lichtbogens 11. Nach der Trennung baut sich die Schmelze 12 an der Elektrode 4 in Phase 50 erneut auf.

In Teilfigur 1B der Figur 1 sind den Phasen 20, 30 und 40 zugeordnete Spannungs- und Stromprofile im Rahmen eines geregelten Lichtbogenverfahrens dargestellt, wobei jeweils eine Spannung U bzw. eine Stromstärke I über eine Zeit t dargestellt ist. Hierbei kommt es während der Phasen 20 und 40 zur Ausbildung eines Lichtbogens, wobei eine Spannung und ein Strom während der Phase 20 einen im Wesentlichen kontinuierlichen Wert aufweisen.

Bei Übergang des Elektrodenmaterials in Phase 30 kommt es zu einem Einbruch der Spannung durch Ausbildung eines Kurzschlusses, welches sich in einem Anstieg der Stromstärke während der Phase 30 manifestiert. Nach Abriss des übergehenden Materialtropfens 12 stellt sich die ursprüngliche Schweißspannung wieder ein und es kommt zu einem Absinken der Stromstärke.

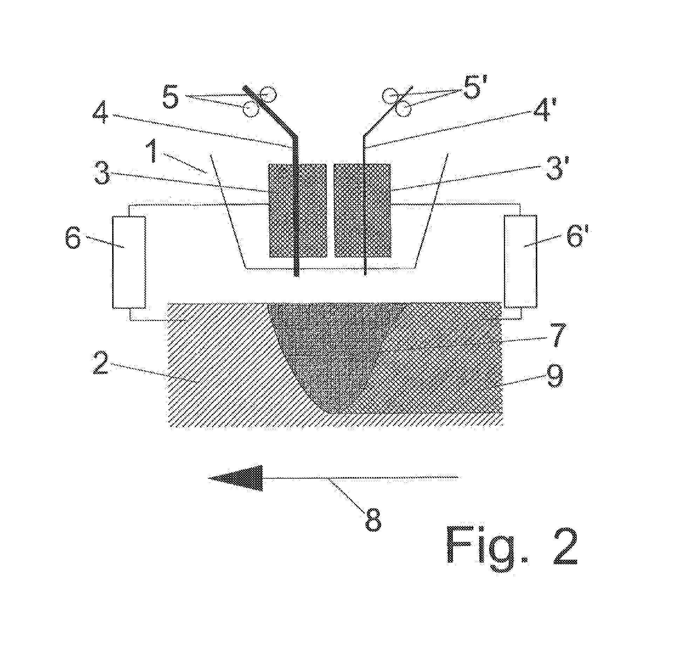

In Figur 2 ist schematisch eine Schutzgasdüse zum Schweißen eines Werkstücks 2 dargestellt, welche zwei Kontaktrohre 3 und 3', zwei Elektroden 4 und 4'und zwei Vorschubeinrichtungen 5 und 5' umfasst. Ferner sind regelbare Stromquellen 6 und 6' für die Lichtbogenerzeugung dargestellt.

Wenigstens eine der Elektroden 4 und 4' kann zur Ausbildung eines Kurzlichtbogens eingerichtet sein, wobei die zugehörige Regeleinrichtung 6 bzw. 6' dann als Regeleinrichtung zur Regelung eines Kurzschlusses in einem Kurzlichtbogenverfahren ausgebildet ist. Die Elektroden 4 und 4' können, symbolisiert durch unterschiedliche zeichnerische Darstellung, zur Ausbildung unterschiedlicher Lichtbogentypen eingerichtet und/oder unterschiedlich dimensioniert sein. Ein unterschiedlicher Vorschub der Elektroden 6, 6' durch die Vorschubeinrichtungen 5 und 5' ist ebenfalls möglich.

Durch die Elektroden 4 und 4' wird ein gemeinsames Schweißbad 7 ausgebildet. Die Schweißrichtung ist mit Pfeil 8 markiert und das nach dem Schweißvorgang zur Schweißnaht erstarte Schweißbad mit 9.

## Patentansprüche

1. Verfahren zum Lichtbogenfügen, bei dem unter Verwendung wenigstens zweier abschmelzender Elektroden (4, 4') Lichtbögen (11) zwischen den Elektroden (4, 4') und dem Werkstück (2) ausgebildet werden, **dadurch gekennzeichnet, dass** wenigstens eine der Elektroden zur Erzeugung eines elektronisch geregelten Kurzlichtbogens (11) eingerichtet ist, wobei Material (12) von der Elektrode (4, 4') auf das Werkstück (2) unter Bildung eines geregelten Kurzschlusses (13) übertragen wird.

2. Verfahren nach Anspruch 1, bei dem eine in einer Schweißrichtung (8) vorlaufende und wenigstens eine in der Schweißrichtung (8) nachlaufende Elektrode (4, 4') verwendet werden, wobei die nachlaufende Elektrode (4') zur Erzeugung eines elektronisch geregelten Kurzlichtbogens (11) eingerichtet ist.

3. Verfahren nach Anspruch 2, bei dem wenigstens eine nachlaufende Elektrode (4, 4') mit einer Energie beaufschlagt wird, die 10 bis 90 %, insbesondere 25 bis 50% jener der vorlaufenden Elektrode (4, 4') beträgt.

4. Verfahren nach einem der vorstehenden Ansprüche, bei dem wenigstens zwei Elektroden (4, 4') in Längsrichtung, schräg oder quer zu einer Schweißrichtung (8) angeordnet werden.

5. Verfahren nach einem der vorstehenden Ansprüche, bei dem jeweils wenigstens eine Elektrode (4, 4') zur Erzeugung eines geregelten oder ungeregelten Kurzlichtbogens, eines Übergangslichtbogens, eines Langlichtbogens, eines Sprühlichtbogens, eines Hochleistungslichtbogens und/oder eines Impulslichtbogens eingerichtet ist.

6. Verfahren nach einem der vorstehenden Ansprüche, bei dem wenigstens eine Elektrode (4, 4') zum Schweißen mit einem geregelten Kurzlichtbogen unter Verwendung von Wechselstrom eingerichtet ist.

7. Verfahren nach einem der vorstehenden Ansprüche, bei dem Elektroden (4, 4') mit einem Durchmesser von 0,8 bis 5 mm, vorzugsweise von 1,0 bis 1,6 mm verwendet werden.

8. Verfahren nach einem der vorstehenden Ansprüche, bei dem ein Schweißstrom (I) zwischen 10 und 400 A, insbesondere zwischen 40 und 300 A, und/oder eine Schweißspannung (U) zwischen 15 und 35 V, insbesondere zwischen 20 und 40 V, verwendet wird.

9. Verfahren nach einem der vorstehenden Ansprüche, bei dem wenigstens eine der Elektroden zur Verwendung von Schutzgas eingerichtet ist und eine Schutzgasmischung verwendet wird, die Kohlendioxid, Argon, Helium, Stickstoff und/oder Sauerstoff und/oder wenigstens ein Dotiergas aufweist.
